# FASCICULE DE BREVET EUROPEEN

(11) **EP 3 423 185 B1**
(45) Date de publication et mention de la délivrance du brevet: **08.04.2020**
(21) Numéro de dépôt: 17710603.6
(22) Date de dépôt: 22.02.2017
(51) Int. Cl.: B01J 20/22, B01J 20/28, B65F 1/00, B65F 1/14

(54) **UTILISATION D'UN PRODUIT SOUS FORME DE LITIÈRE EN GRANULES OU EN POUDRE POUR ABSORBER LES LIQUIDES AFIN DE NEUTRALISER LES ODEURS ET/OU LUTTER CONTRE LA PROLIFÉRATION DE GERMES ET/OU DE BACTÉRIES**
VERWENDUNG EINES ERZEUGNISSES IN FORM VON GRANULIERTER ODER PULVERFÖRMIGER STREU ZUR AUFNAHME VON FLÜSSIGKEITEN ZUR GERUCHSNEUTRALISIERUNG UND/ODER ZUR BEKÄMPFUNG DER AUSBREITUNG VON KEIMEN UND/ODER BAKTERIEN
USE OF A PRODUCT IN THE FORM OF GRANULATED OR POWDERED LITTER FOR ABSORBING LIQUIDS IN ORDER TO NEUTRALISE SMELLS AND/OR TO COMBAT AGAINST THE PROLIFERATION OF GERMS AND/OR BACTERIA

(30) Priorité: 29.02.2016 FR 1651655
(43) Date de publication de la demande: 09.01.2019
(73) Titulaire: Faure, Alexis, 75116 Paris (FR); Casalino (Épouse Exposito), Patricia, 75016 Paris (FR)
(72) Inventeur: CASALINO (ÉPOUSE EXPOSITO), Patricia, 75016 Paris (FR)
(74) Mandataire: Icosa
(86) Numéro de dépôt international: PCT/FR2017/050392
(87) Numéro de publication internationale: WO 2017/149220

(56) Documents cités:
- EP-A1- 2 845 471
- DE-A1- 3 710 574
- FR-A1- 2 488 158
- Anonymous: "Séchage du digestat - Dorset", , 6 janvier 2016 (2016-01-06), pages 1-2, XP055316513, Extrait de l'Internet: URL:https://web.archive.org/web/2016010622 3132/http://www.dorset.nu/fr/home-gm-4/app lications/digestat [extrait le 2016-11-04]

## Description

La présente invention concerne l'utilisation d'un produit sous forme de litière en granules ou en poudre pour absorber les liquides afin de neutraliser les odeurs et/ou lutter contre la prolifération de germes et/ou de bactéries, ledit produit étant destiné à être disposé au fond d'un container recevant des produits malodorants.

Les poubelles, en particulier celles contenant les déchets de particuliers, d'entreprises ou de collectivités, sont très souvent nauséabondes, ce qui peut incommoder leurs propriétaires et toute personne se trouvant momentanément ou régulièrement à proximité (voisins, commerçants, passants, etc.)

Les odeurs dégagées sont d'autant plus intenses et persistantes que la poubelle a été utilisée depuis longtemps ou qu'il fait chaud.

Par ailleurs, les germes et autres bactéries qui provoquent ces odeurs peuvent avoir un impact sur la santé, notamment par la prolifération d'insectes (mouches, cafards), de rats ou d'autres animaux nuisibles pouvant transporter et transmettre diverses maladies.

Or, des poubelles propres sont essentielles pour la santé et le confort.

La principale source d'odeur est le fond de la poubelle où un dépôt/résidu liquide/pâteux est difficile à gérer au fur et à mesure que la poubelle se remplit. La stagnation est parfois longue (4 jours, voire 1 semaine)

Il existe actuellement très peu de solutions pour remédier à ce problème, hormis l'utilisation de poudre insecticide minérale et/ou désodorisante ou de sable. Ces solutions restent pour la plupart très artisanales, peu pratiques, pas écologiques et peu efficaces.

Le document EP 2 845 471 A1 divulgue l'utilisation d'un produit sous forme de granules en déchets végétaux ou sous forme d'un poudre en sciure de bois pour absorber l'urine et les matières fécales d'un chat afin de neutraliser les odeurs, le produit étant disposé au fond d'un bac à litière pour chat et recevant des produits malodorants tels que les excréments de chat.

Un but de la présente invention est donc de résoudre les problèmes cités précédemment, à l'aide d'une solution simple à fabriquer, peu coûteuse, facile à utiliser, écologiquement respectueuse de l'environnement et optimisée en termes d'efficacité.

Par conséquent, la présente invention a pour objet l'utilisation d'un produit sous forme de litière en granules ou en poudre pour absorber les liquides afin de neutraliser les odeurs et/ou lutter contre la prolifération de germes et/ou de bactéries, disposé au fond d'un container, choisi parmi une poubelle ou un sac, recevant des produits malodorants tels que des ordures ménagères, caractérisé en ce que le produit se compose à plus de 50% en masse, de préférence à plus de 75% en masse de déchets organiques végétaux provenant de l'industrie agroalimentaire, de résidus de céréales ou de silos à grain.

Cette solution entre dans le cadre du développement durable et de la valorisation des déchets. Ainsi, le contenu des poubelles pourra être entièrement recyclé car la litière ne contient ni minéraux ni plastiques susceptibles d'empêcher cette future valorisation des déchets.

Selon des modes de réalisation préférés, le produit utilisé au sein de la présente invention comprend l'une au moins des caractéristiques suivantes :
- les granules comportent plus de 80% de déchets organiques végétaux, de préférence plus de 90% et avantageusement plus de 95% ;
- le produit comporte en outre un faible pourcentage de poudre végétale désodorisante et répulsive, de préférence parfumée ;
- le produit est conditionné dans un réceptacle souple réalisé en non tissé formant un coussin renfermant la matière ;
- le coussin est de section ronde, ovale ou polygonale et présente une épaisseur moyenne comprise entre quelques millimètres et quelques centimètres, de préférence entre environ 5 millimètres et 3 centimètres, avantageusement entre environ 1 et 2 centimètres ;
- le coussin est en matière entièrement recyclable ;
- lien de plusieurs dizaines de centimètres, avantageusement entre 50 et 150 cm, est fixé au cousin afin de pouvoir le retirer facilement du container après utilisation ; et
- en variante, le produit est conditionné en vrac dans une boîte cartonnée à base de produit recyclé ou en sac recyclable souple de quelques kilogrammes.

L'invention va maintenant être décrite plus en détail en référence à des modes de réalisation particuliers donnés à titre d'illustration uniquement et représentés sur
- la figure 1 qui est une vue en perspective éclatée d'un réceptacle à ordure ménagère et d'un dispositif d'absorption d'odeur conforme à la présente invention, et
- la figure 2 qui est une variante de réalisation du dispositif la figure 1.

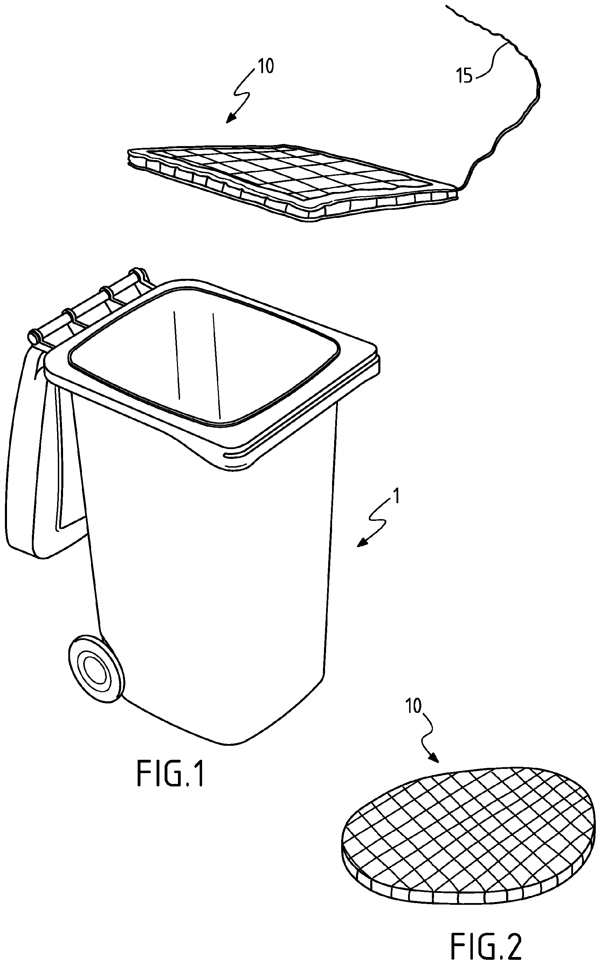

La figure 1 représente un container 1 de type connu destiné à recevoir des ordures ménagères comprenant notamment des restes alimentaires et des morceaux d'emballages non recyclables, qui sont contenus dans différents sacs poubelle prévu à cet effet provenant par exemple de la cuisine d'une habitation (maison, immeuble). Il pourrait bien entendu également s'agir de déchets issus d'un restaurant, d'un hôtel, d'une entreprise privée ou publique, d'un commerce de bouche telle qu'une poissonnerie, une pâtisserie ou une boucherie, d'une collectivité locale, etc.

Ces ordures sont en général odorantes, et la puanteur émise augmente à mesure que le temps passe et que la fermentation s'effectue. Il arrive en effet que les poubelles ne soient ramassées qu'une fois tous les 3-4 jours, voire une fois par semaine. Cette odeur provient principalement de la dégradation naturelle des déchets combinée à une humidité stagnante (résidu liquide/pâteux) qui subsiste au fond de la poubelle, en particulier quand les sacs s'ouvrent, se percent ou se déchirent. Cela provoque la création de germes puis de nuisibles (mouches, cafards, rats et autre vermine) qui sont attirés par l'odeur et peuvent transporter et transmettre des maladies.

Par conséquent, la stagnation des ordures dans une poubelle engendrent plusieurs désagréments que l'invention se propose de résoudre efficacement.

Pour cela, il est prévu de réaliser un produit sous forme de litière en granules ou en poudre pour absorber les liquides afin de neutraliser les odeurs et/ou lutter contre la prolifération de germes et/ou de bactéries.

Ce produit est soit disponible en vrac et livré par exemple en carton (recyclé) ou sac biodégradable (de 10 à 15 kg par exemple), soit, comme cela est représenté sur la figure 1, ensaché dans un emballage souple non tissé de type coussin de faible épaisseur et dimensionnés (longueur et largeur) aux dimensions normalisées des containers d'ordures que l'on trouve habituellement sur le territoire, qu'il s'agissent de poubelle individuelle (plusieurs formats possibles selon la constitution de la famille) ou collectives (en particulier pour lotissements ou immeubles). Plusieurs formats de coussins sont ainsi disponibles, de même que différentes formes de base, par exemple une section carrée, rectangle ou ronde pour les plus communes.

Typiquement, l'épaisseur moyenne du coussin 10 est comprise entre quelques millimètres et quelques centimètres, de préférence entre environ 5 millimètres et 3 centimètres, avantageusement entre environ 1 et 2 centimètres pour qu'il soit léger tout en contenant suffisamment de produit absorbant.

Le coussin est muni de multiples coutures qui se croisent, par exemple en formant des motifs en forme de losanges, pour former des sortes d'alvéoles interne emprisonnant chacun une petite partie du produit afin que ce dernier soit réparti de manière homogène de façon à optimiser l'absorption des liquides.

Le coussin 10 comporte par ailleurs un lien 15 de plusieurs dizaines de centimètres permettant de le récupérer au fond de la poubelle 1, en particulier pour le changer.

Bien entendu, le tissu non tissé constituant le coussin 10 est d'un part poreux/respirant, c'est-à-dire qu'il permet au produit qu'il contient d'absorber l'humidité résiduelle présente au fond de la poubelle 1, résistant, afin de ne pas se déchirer et disperser ledit produit, et entièrement recyclable.

Le produit sous forme de litière en granules ou en poudre présente une composition essentiellement à base organique, par exemple à plus de 50%, de préférence plus de 75%.

Avantageusement, les granules qui le constituent comporte plus de 80% de matière organique, de préférence plus de 90% et avantageusement plus de 95%.

Plus précisément, le produit se compose principalement de déchets organiques végétaux, en particulier d'un digestat hygiénisé et stabilisé issu d'un procédé de méthanisation des déchets organiques végétaux et comportant, à quelques pourcents près, environ 30% de déchets de légumes/fruits issus de l'industrie agroalimentaire, environ 40% de résidus de cultures ou de céréales et environ 20% de fumier de cheval, environ 10% de résidus de paille de maïs et environ 10% de déchets verts.

Le produit peut également comporter un faible pourcentage de poudre végétale désodorisante et répulsive, de préférence parfumée (parfum naturel).

De préférence, le digestat est issu d'une méthanisation durant au moins 25 jours à 55°C.

Ainsi, le produit utilisé au sein de la présente invention améliore notablement l'hygiène des poubelles, le confort et la salubrité par l'absorption des liquides présents au fond de la poubelle afin de neutraliser odeurs, permettant d'avoir un fond de poubelle sain dépourvu de germes ou de nuisibles. Il est facile d'utilisation, entièrement bio dégradable et entre donc dans le processus de valorisation des déchets et du développement durable, les granules ne comportant aucun minéral ou matière plastique.

Il permet aussi d'éviter la prolifération des nuisibles (cafards, rats, vermine) pouvant notamment transporter des maladies.

Son conditionnement le rend très simple d'utilisation (installation et retrait), facile à stocker, totalement écologique car entièrement recyclable, et adapté à tous types de container.

Il va de soi que la description détaillée de l'objet de l'Invention, donnée uniquement à titre d'illustration, ne constitue en aucune manière une limitation.

Ainsi, le produit est également adapté à un usage domestique pour les poubelles d'intérieur telles que celle de la cuisine, des toilettes ou de la salle de bain. Elle peut également être utilisée pour les poubelles de déchets verts.

La paille de maïs peut être remplacée par de la paille d'autres céréales.

Les résidus de céréales peuvent être des semences dégradées, notamment de blé ou d'orge.

Le lien n'est pas indispensable dans le cas où la poubelle n'est pas très profonde (poubelle de cuisine par exemple).

Dans le cas où le produit n'est pas ensaché, c'est-à-dire en vrac, il forme une sorte de litière absorbant l'humidité résiduelle présente au fond des poubelles. Il peut être versé à la main ou par exemple à l'aide d'une pelle.

Le produit sous forme de litière peut également être issu d'un compost dégradé provenant d'un procédé de compostage.

## Revendications

1. Utilisation d'un produit sous forme de litière en granules ou en poudre pour absorber les liquides afin de neutraliser les odeurs et/ou lutter contre la prolifération de germes et/ou de bactéries, disposé au fond d'un container (1), choisi parmi une poubelle ou un sac, recevant des produits malodorants tels que des ordures ménagères, **caractérisé en ce que** le produit se compose à plus de 50% en masse et de préférence plus de 75% en masse de déchets organiques végétaux provenant de l'industrie agroalimentaire, de résidus de céréales ou de silos à grain.

2. Utilisation du produit selon la revendication 1, **caractérisé en ce que** les granules comportent plus de 80% en masse de déchets organiques végétaux, de préférence plus de 90% en masse et avantageusement plus de 95% en masse.

3. Utilisation du produit selon l'une quelconque des revendications précédentes, **caractérisé en ce qu'**il comporte en outre de la poudre végétale désodorisante et répulsive, de préférence parfumée.

4. Utilisation d'un conditionnement en forme de coussin réalisé en non tissé (10) renfermant le produit selon l'une quelconque des revendications 1 à 3, pour absorber les liquides afin de neutraliser les odeurs et/ou lutter contre la prolifération de germes et/ou de bactéries, disposé au fond d'un container (1), choisi parmi une poubelle ou un sac, recevant des produits malodorants tels que des ordures ménagères.

5. Utilisation du conditionnement selon la revendication 4, **caractérisé en ce que** le coussin (10) est de section ronde, ovale ou polygonale et présente une épaisseur moyenne comprise entre 5 millimètres et 3 centimètres, avantageusement entre 1 et 2 centimètres.

6. Utilisation du conditionnement selon l'une quelconque des revendications 4 ou 5, **caractérisé en ce qu'**un lien (15) de plusieurs dizaines de centimètres, avantageusement entre 50 et 150 cm, est fixé au coussin afin de pouvoir le retirer facilement du container (1) après utilisation.

## Patentansprüche

1. Verwendung eines Produkts in Form von Einstreu in Granulat- oder Pulverform zum Absorbieren von Flüssigkeiten, um Gerüche zu neutralisieren und/oder die Vermehrung von Keimen und/oder von Bakterien zu bekämpfen, das am Boden eines Behälters (1), ausgewählt aus einer Mülltonne oder einem Beutel, der übelriechende Produkte wie etwa Hausmüll aufnimmt, angeordnet wird, **dadurch gekennzeichnet, dass** sich das Produkt zu mehr als 50 Masse-%, und vorzugsweise zu mehr als 75 Masse-% aus organischen Pflanzenabfällen zusammensetzt, die aus der Lebensmittelindustrie, aus Getreiderückständen oder aus Kornsilos stammen.

2. Verwendung des Produkts nach Anspruch **1**, **dadurch gekennzeichnet, dass** das Granulat mehr als 80 Masse-%, vorzugsweise mehr als 90 Masse-%, und vorteilhafterweise mehr als 95 Masse-% organische Pflanzenabfälle umfasst.

3. Verwendung des Produkts nach einem der vorstehenden Ansprüche, **dadurch gekennzeichnet, dass** es weiter desodorierendes und abwehrendes, vorzugsweise parfümiertes pflanzliches Pulver enthält.

4. Verwendung einer Verpackung in Form eines aus Vlies hergestellten Kissens (10), das das Produkt nach einem der Ansprüche **1** bis **3** umschließt, zum Absorbieren von Flüssigkeiten, um Gerüche zu neutralisieren und/oder die Vermehrung von Keimen und/oder von Bakterien zu bekämpfen, das am Boden eines Behälters (1), ausgewählt aus einer Mülltonne oder einem Beutel, der übelriechende Produkte wie etwa Hausmüll aufnimmt, angeordnet wird.

5. Verwendung der Verpackung nach Anspruch **4**, **dadurch gekennzeichnet, dass** das Kissen (10) von rundem, ovalem oder vieleckigem Querschnitt ist und eine mittlere Dicke zwischen 5 Millimeter und 3 Zentimeter, vorteilhafterweise zwischen 1 und 2 Zentimeter aufweist.

6. Verwendung der Verpackung nach einem der Ansprüche **4** oder **5**, **dadurch gekennzeichnet, dass** ein Band (15) von mehreren Dutzend Zentimetern, vorteilhafterweise zwischen 50 und 150 cm, am Kissen befestigt ist, um dasselbe nach Verwendung leicht aus dem Behälter (1) herausziehen zu können.

## Claims

1. Use of a product in the form of granular or powdered litter for absorbing liquids in order to neutralise odours and/or to combat the proliferation of germs and/or bacteria, disposed at the bottom of a container (1), selected from a bin or a bag, receiving malodorous products such as household wastes, **characterised in that** the product consists of more than 50% by mass and preferably more than 75% by mass of organic plant waste originating from the food industry, from grain residues or from grain silos.

2. Use of the product according to claim **1**, **characterized in that** the granules comprise more than 80% by mass of organic vegetable waste, preferably more than 90% by mass and advantageously more than 95% by mass.

3. Use of the product according to any one of the preceding claims, **characterized in that** it further comprises deodorizing and repellent vegetable powder, preferably perfumed vegetable powder.

4. Use of a conditioning in the form of a cushion (10) made of non-woven fabric enclosing the product according to any one of claims **1** to **3**, for absorbing liquids in order to neutralise odours and/or to combat the proliferation of germs and/or bacteria, disposed at the bottom of a container (1) selected from a bin or a bag, receiving malodorous products such as household wastes.

5. Use of the conditioning according to claim **4**, **characterised in that** the cushion (10) is of round, oval or polygonal section and has an average thickness of between 5 millimetres and 3 centimetres, advantageously between 1 and 2 centimetres.

6. Use of the conditioning according to any one of claims **4** or **5**, **characterized in that** a link (15) of several tens of centimetres, advantageously between 50 and 150 cm, is fixed to the cushion in order to be able to remove it easily from the container (1) after use.
